# EUROPÄISCHE PATENTSCHRIFT

(11) **EP 2 297 472 B1**
(45) Veröffentlichungstag und Bekanntmachung des Hinweises auf die Patenterteilung: **10.07.2013**
(21) Anmeldenummer: 09757162.4
(22) Anmeldetag: 13.05.2009
(51) Int. Cl.: F16B 41/00

(54) **VORRICHTUNG ZUM VERLIERSICHEREN HALTEN EINES SCHAFTES EINES GEGENSTANDES AN EINEM AUFNAHMETEIL**
DEVICE FOR CAPTIVELY HOLDING A SHANK OF AN OBJECT ON A RECEIVING PART
DISPOSITIF POUR LE MAINTIEN IMPERDABLE D UNE TIGE D UN OBJET SUR UNE PIÈCE DE RÉCEPTION

(30) Priorität: 04.06.2008 DE 102008026768
(43) Veröffentlichungstag der Anmeldung: 23.03.2011
(73) Patentinhaber: A. Raymond et Cie., 38000 Grenoble (FR)
(72) Erfinder: BERNARD, Nicolas, F-38360 Sassenage (FR)
(74) Vertreter: RACKETTE Partnerschaft Patentanwälte
(86) Internationale Anmeldenummer: PCT/EP2009/003380
(87) Internationale Veröffentlichungsnummer: WO 2009/146778

(56) Entgegenhaltungen:
- DE-A1- 19 523 932
- US-A- 3 645 311
- US-A- 5 074 727

## Beschreibung

Die Erfindung betrifft eine Vorrichtung zum verliersicheren Halten eines Schaftes eines Gegenstandes an einem Aufnahmeteil gemäß dem Oberbegriff des Patentanspruches 1.

Eine derartige Vorrichtung zum verliersicheren Halten eines Schaftes eines Gegenstandes an einem Aufnahmeteil ist aus US-A-5,074,727 bekannt. Die Vorrichtung ist ein einstückiges Stanz-Biege-Teil, das aus einem gestanzten und in Form gebogenen Blech hergestellt ist und weist eine Außenhülse auf, die in eine in das Aufnahmeteil eingebrachte Aufnahmeausnehmung einfügbar ist und die einen Aufnahmeraum umschließt. Weiterhin ist eine Anzahl von in den Aufnahmeraum hineinragenden Rastzungen vorhanden, die zum Eingriff mit dem Schaft ausgebildet sind.

Eine weitere Vorrichtung zum verliersicheren Halten eines Schaftes eines Gegenstandes an einem Aufnahmeteil ist aus DE 195 24 932 C2 bekannt. Diese vorbekannte Vorrichtung weist eine umfänglich geschlossene Außenhülse auf, die in eine in ein Aufnahmeteil eingebrachte Aufnahmeausnehmung unter Einpressen einfügbar ist und die einen eine Einführöffnung aufweisenden Aufnahmeraum umschließt. Im seitlichen Wandbereich der Aufnahmehülse sind eine Anzahl von in den Aufnahmeraum hineinragenden Rastzungen ausgestanzt, die zum Eingriff mit einem Schaft eines Gegenstandes ausgebildet sind, der mit dem Aufnahmeteil zu verbinden ist, in das die vorbekannte Vorrichtung eingefügt ist.

Der Erfindung liegt die Aufgabe zugrunde, eine Vorrichtung der eingangs genannten Art anzugeben, die sich durch einen guten Toleranzausgleich bezüglich der relativen Dimensionen sowie der relativen Lage der Aufnahmeausnehmung und der Außenhülse bei einem gleichzeitigen sicheren Halten des Schaftes mit einer gewissen Variabilität in dessen Ausrichtung zu der Außenhülse auszeichnet. Diese Aufgabe wird von einer Vorrichtung der eingangs genannten Art erfindungsgemäß mit den kennzeichnenden Merkmalen des Patentanspruches 1 gelöst.

Durch das Ausbilden der Außenhülse mit einer Basiswand und zwei seitlichen Seitenwänden, deren freie Enden einander gegenüberliegend angeordnet sind, lässt sich die Außenhülse beispielsweise durch Zusammendrücken von einer in Bezug auf eine Aufnahmeausnehmung anfänglich übergroßen Dimensionierung ohne weiteres an die tatsächlichen Abmessungen der Aufnahmeausnehmung anpassen, deren Dimensionen wiederum gewissen Größentoleranzen unterliegen. Durch das Ausbilden der Rastzungen an dem von den Bewegungen der Außenhülse unabhängigen Deckring wiederum ist durch die Anpassung der Außenhülse an die Abmessungen der Aufnahmeausnehmung die Stabilität der Verbindung mit einem Schaft eines Gegenstandes nicht beeinträchtigt, der wiederum aufgrund der verhältnismäßig flexiblen Anbindung des Deckringes an die Außenhülse beispielsweise in unterschiedlichen Ausrichtungen gegenüber der Außenhülse und damit zu dem Aufnahmeteil nach Art eines Kugelgelenkes ausgerichtet sein kann.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles der Erfindung mit Bezug auf die Figuren der Zeichnung. Es zeigen:
- Fig. 1: in einer perspektivischen Ansicht ein Ausführungsbeispiel einer erfindungsgemäßen Vorrichtung mit einer eine plane Basiswand und zwei rund gebogene Seitenwände aufweisenden Außenhülse,
- Fig. 2: in einer geschnittenen perspektivischen Ansicht das Ausführungsbeispiel gemäß Fig. 1 in einer in einer Aufnahmeausnehmung eines Aufnahmeteiles eingefügten Anordnung und
- Fig. 3: in einer teilgeschnittenen perspektivischen Ansicht das Ausführungsbeispiel gemäß Fig. 1 mit einem eingeschraubten Schraubenschaft.

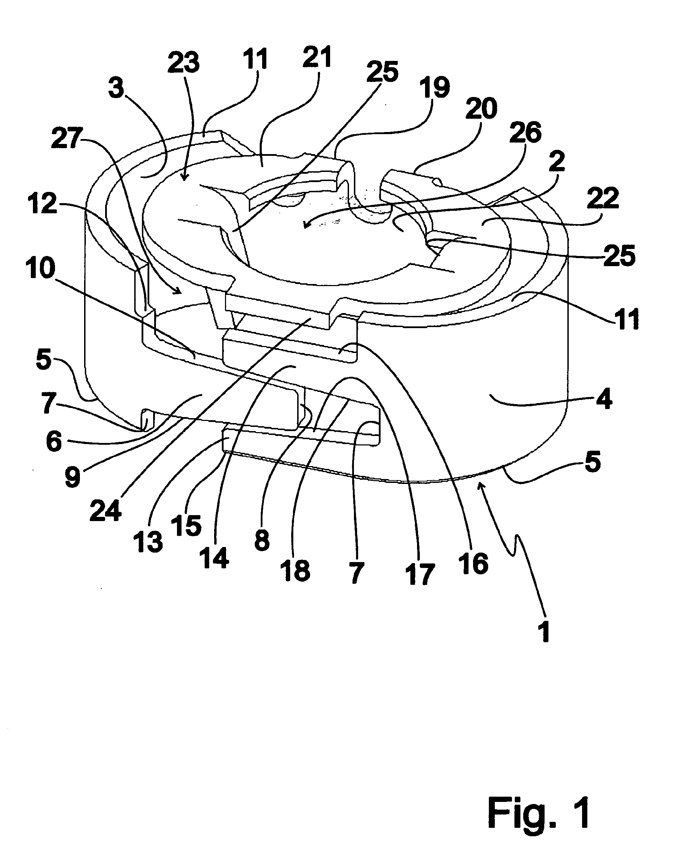

Fig. 1 zeigt in einer perspektivischen Ansicht ein Ausführungsbeispiel einer als einstückiges Stanz-Biege-Teil ausgeführten erfindungsgemäßen Vorrichtung, das aus einem gestanzten und in Form gebogenen Blech von verhältnismäßig präzise gleichbleibender Wandstärke hergestellt ist. Das Ausführungsbeispiel gemäß Fig. 1 verfügt über eine Außenhülse 1, die eine in etwa quadratische flache Basiswand 2 aufweist. An einer Seite der Basiswand 2 ist eine in einer Biegerichtung rund gebogene erste Seitenwand 3 und an der dieser Seite gegenüberliegenden Seite eine zweite Basiswand 4 angesetzt, die ebenfalls in der Biegerichtung auf die erste Seitenwand 3 zu rund gebogen ist.

An der ersten Seitenwand 3 ist in einem Abstand von einem bodenseitigen Außenrand 5 ein Innenfinger 6 als ein Element einer Eingriffsstruktur angeformt, der sich von der von der Basiswand 2 abgewandten stirnseitigen Randseite 7 der ersten Seitenwand 3 weg in Richtung der gegenüberliegenden stirnseitigen Randseite 7 der zweiten Seitenwand 4 erstreckt. Der Innenfinger 4 weist zwei von der stirnseitigen Randseite 7 der ersten Seitenwand 3 zu einer Endseite 8 konisch zulaufende Außenseiten 9, 10 auf.

Zwischen der dem bodenseitigen Außenrand 5 der ersten Seitenwand 3 abgewandten Außenseite 10 und einem dem bodenseitigen Außenrand 5 gegenüberliegenden deckseitigen Außenrand 11 der ersten Seitenwand ist eine Formstufe 12 ausgebildet, die die Randseite 7 der ersten Seitenwand 3 in dem dem deckseitigen Außenrand 11 benachbarten Bereich gegenüber dem dem Innenfinger 6 benachbarten Bereich der stirnseitigen Randseite 7 der ersten Seitenwand 3 zurücktreten lässt.

An der stirnseitigen Randseite 7 der zweiten Seitenwand 4 sind als weitere Elemente der Eingriffsstruktur ein erster Außenfinger 13 und ein zweiter Außenfinger 14 in einem Abstand voneinander angeformt, wobei eine Außenseite 15 des ersten Außenfingers 13 bündig mit dem bodenseitigen Außenrand 5 der zweiten Seitenwand 4 ausgebildet ist und eine Außenseite 16 des zweiten Außenfingers 14 in einem der Lage der Formstufe 12 entsprechenden Abstand von dem deckseitigen Außenrand 11 der zweiten Seitenwand 4 angeordnet ist.

Die einander gegenüberliegenden Innenseiten 17, 18 der Außenfinger 13, 14 sind komplementär zu den Außenseiten 9, 10 des Innenfingers 6 ausgebildet und weisen somit ausgehend von der stirnseitigen Randseite 7 der zweiten Seitenwand 4 in Richtung der ersten Seitenwand 3 einen kontinuierlich zunehmenden Abstand auf, so dass bei Anliegen der Endseite 8 des Innenfingers 6 an den zwischen den Außenfingern 13, 14 liegenden Abschnitt der stirnseitigen Randseite 7 der zweiten Seitenwand 4 die Außenseiten 9, 10 des Innenfingers 6 an den ihnen gegenüberliegenden Innenseiten 17, 18 der Außenfinger 13, 14 flächig anliegen. Durch den Abstand zwischen den von der zweiten Seitenwand 4 wegweisenden freien Enden der Außenfinger 13, 14, der größer ist als der Abstand zwischen den Außenseiten 9, 10 des Innenfingers 6 im Bereich der Endseite 8 ist, lässt sich aufgrund des dadurch erzielten Zentriereffektes die Außenhülse 1 verhältnismäßig einfach und sicher schließen.

Weiterhin lässt sich Fig. 1 entnehmen, dass der sich zwischen der Außenseite 16 des zweiten Außenfingers 14 und dem deckseitigen Außenrand 11 der zweiten Seitenwand 4 erstreckende Bereich der stirnseitigen Randseite 7 der zweiten Seitenwand 4 gegenüber dem sich zwischen den Außenfingern 13, 14 erstreckenden Bereich der stirnseitigen Randseite 7 der zweiten Seitenwand 4 in Richtung der ersten Seitenwand 3 vorversetzt ist.

Bei diesem Ausführungsbeispiel sind an der Basiswand 2 ein erster Anbindungssteg 19 und ein zweiter Anbindungssteg 20 angeformt, die von der Basiswand 2 wegweisend um etwa 90 Grad in Richtung der freien Enden der Seitenwände 3, 4 umgebogen sind. An dem ersten Anbindungssteg 19 ist eine erste in etwa halbkreisförmige Ringhälfte 21 angeformt, die in einem radialen Abstand von dem deckseitigen Außenrand 8 der ersten Seitenwand 3 verläuft. Entsprechend ist an dem zweiten Anbindungssteg 20 eine ebenfalls in etwa halbkreisförmige zweite Ringhälfte 22 angeformt, wobei bei diesem Ausführungsbeispiel die von den Anbindungsstegen 19, 20 abgewandten Enden der bei diesem Ausführungsbeispiel einen geschlossenen Deckring 23 bildenden Ringhälften 21, 22 endseitig jeweils mit einem über die Außenseite 16 des zweiten Außenfingers 14 überstehenden Anschlagzapfen 24 einer hier einstückigen Anschlagzapfenanordnung ausgebildet und miteinander verbunden sind. Dadurch ist der Deckring 23 sehr stabil ausgebildet.

Bei einer nicht dargestellten Abwandlung des anhand Fig. 1 erläuterten Ausführungsbeispieles liegen die den Anbindungsstegen 19, 20 abgewandten freien Enden der Ringhälften 21, 22 aneinander an oder sind dicht benachbart angeordnet, ohne jedoch verbunden zu sein. Somit ist die durch die beiden nunmehr separaten Anschlagzapfen 24 gebildete Anschlagzapfenanordnung zweistückig ausgebildet. Dadurch ergibt sich eine höhere Flexibilität des Deckringes 23.

Zwischen den Anbindungsstegen 19, 20 und dem Anschlagzapfen 24 weist jede Ringhälfte 21, 22 eine gleiche Anzahl von Rastzungen 25, bei diesem Ausführungsbeispiel jeweils eine Rastzunge 25, auf, die sich in Richtung der bodenseitigen Außenränder 5 der den Ringhälften 21, 22 jeweils gegenüberliegenden Seitenwände 3, 4 erstrecken, so dass ausgehend von einer von den Ringhälften 21, 22 umschlossenen Einführöffnung 26 in zunehmendem Abstand von der Einführöffnung 26 in einen von der Außenhülse 1 umschlossenen Aufnahmeraum 27 hinein der Abstand zwischen den einander gegenüberliegenden Rastzungen 25 zunehmend kleiner wird.

Wie aus Fig. 1 ersichtlich, sind die Ringhälften 21, 22 in einem Abstand von den deckseitigen Außenrändern 11 der Seitenwände 3, 4 angeordnet. Die Anschlagzapfen 24 der Ringhälften 21, 22 sind selbst bei einer an dem zwischen der Innenseiten 17, 18 der Außenfinger 13, 14 liegenden Abschnitt der stirnseitigen Randseite 7 der zweiten Seitenwand 4 anliegenden Endseite 8 des Innenfingers 6 in der durch die gegenüber den deckseitigen Außenrändern 11 der Seitenwände 3, 4 vertieften Außenseite 16 des zweiten Außenfingers 14 sowie der in Richtung des deckseitigen Außenrandes 11 der ersten Seitenwand 3 weisenden Fläche der Formstufe 12 gebildeten Zapfenaufnahmeaussparung angeordnet, so dass der durch die Ringhälften 21, 22 gebildete Deckring 23 insgesamt in den Aufnahmeraum 27 eintauchen kann, falls eine entsprechende axiale Druckkraft auf einen in die Einführöffnung 26 bis zum Eingriff mit den Rastzungen 25 eingeschobenen Schaft eines Gegenstandes ausgeübt wird. Dabei bildet die Außenseite 16 des zweiten Außenfingers 14 und gegebenenfalls auch der Formstufe 12 für die Anschlagzapfen 24 einen Anschlag, der ein übermäßiges Eintauchen des Deckringes 23 verhindert.

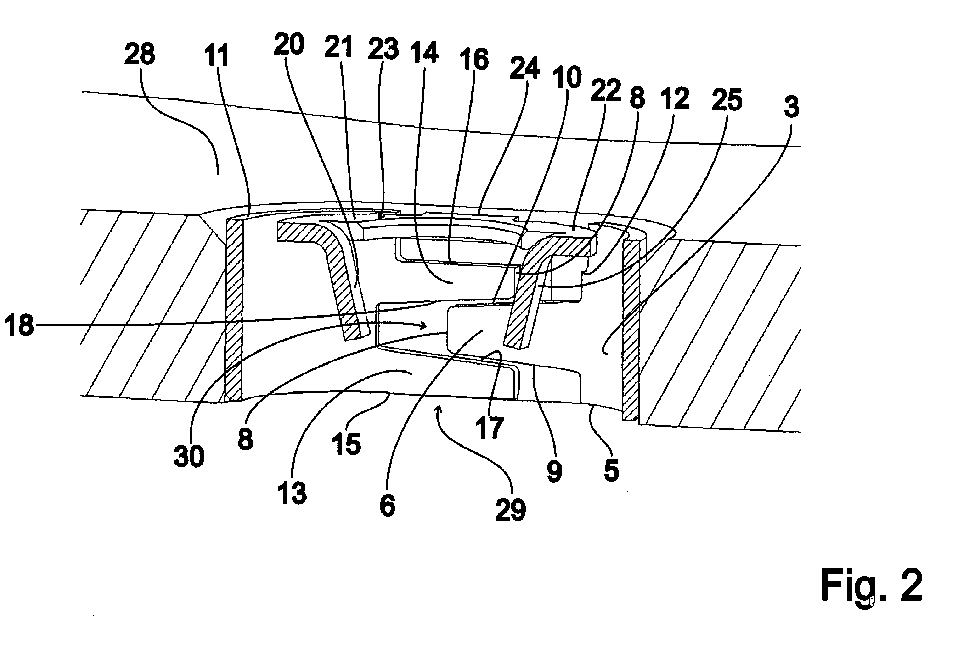

Fig. 2 zeigt in einer teilgeschnittenen perspektivischen Ansicht das Ausführungsbeispiel gemäß Fig. 1 in einer Anordnung in einer als Langloch in einem Trägerteil 28 ausgebildeten Aufnahmeausnehmung 29. Aus Fig. 2 ist ersichtlich, dass der Innenfinger 6 in etwa bis in die Mitte eines zwischen den Außenfingern 13, 14 ausgebildeten Innenfingeraufnahmeraumes 30 eingetaucht ist, so dass noch ausreichend Toleranz für ein Einfügen der erfindungsgemäßen Befestigungsvorrichtung bei gegenüber der Ausgestaltung gemäß Fig. 2 kleiner dimensionierten Aufnahmeausnehmungen 29 verbleibt. Entsprechend lässt sich die erfindungsgemäße Vorrichtung auch in gegenüber der Ausgestaltung gemäß Fig. 2 größeren Aufnahmeausnehmungen 29 anordnen, indem ausgehend von einer gegenüber den Abmessungen derartiger Aufnahmeausnehmungen 29 weiter aufgebogenen Seitenwänden 3, 4 durch Ausüben einer radial wirkenden Kraft auf diese in die entsprechende Aufnahmeausnehmung 29 eingefügt wird, wobei in dieser Anordnung dann der Innenfinger 6 gegenüber der Anordnung gemäß Fig. 2 weniger tief in den Innenfingeraufnahmeraum 30 eingetaucht ist.

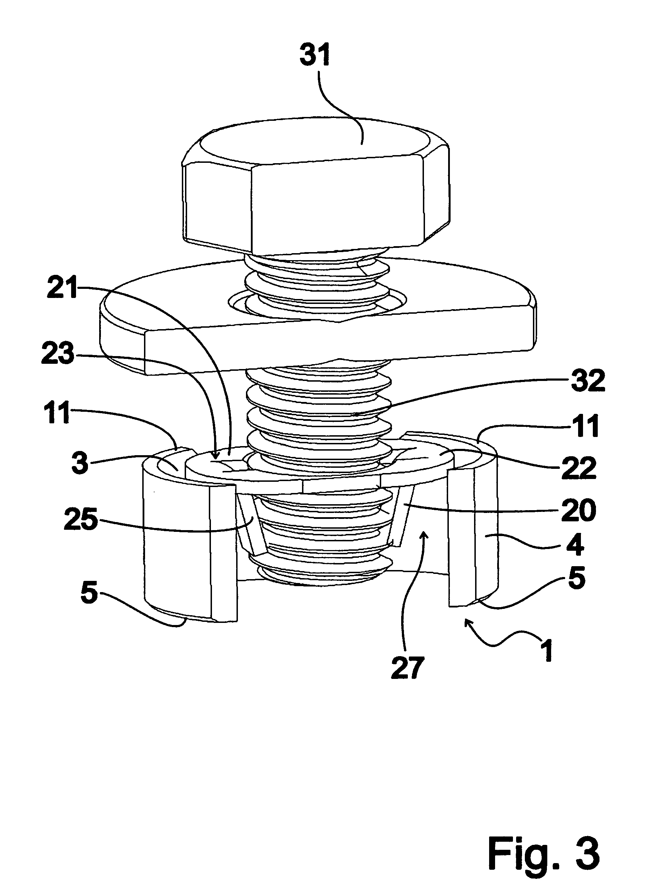

Fig. 3 zeigt in einer perspektivischen Ansicht das Ausführungsbeispiel gemäß Fig. 1 und Fig. 2 mit einem als Schraube 31 ausgebildeten Gegenstand, dessen mit einem Außengewinde versehener Außenschaft 32 als Schaft in den Aufnahmeraum 27 eingetreten ist, in dem die Schraube 31 mit ihrem Gewindeschaft 32 durch die Einführöffnung 26 hindurchtretend unter Anlage der von den Ringhälften 21, 22 wegweisenden freien Enden der Rastzungen 25 bei relativ geringer Elastizität in radialer Richtung eingedreht oder bei relativ hoher Elastizität in radialer Richtung eingeschoben worden ist. In dieser Anordnung ist die Schraube 31 unabhängig von der relativen Anordnung der Seitenwände 3, 4 zueinander verliersicher in der erfindungsgemäßen Vorrichtung und damit insbesondere bei einem geöffneten Deckring 23 gemäß der vorangehend erläuterten Abwandlung an einem in Fig. 3 nicht dargestellten Aufnahmeteil 28, in das die erfindungsgemäße Vorrichtung in einer Aufnahmeausnehmung 29 eingefügt ist, mit einer gewissen Toleranz bezüglich ihrer Ausrichtung zu der Außenhülse 1 und damit zu dem Aufnahmeteil 28 gehalten.

## Patentansprüche

1. Vorrichtung zum verliersicheren Halten eines Schaftes (32) eines Gegenstandes (31) an einem Aufnahmeteil (28) mit einer Außenhülse (1), die in eine in das Aufnahmeteil (28) eingebrachte Aufnahmeausnehmung (29) einfügbar ist und die einen Aufnahmeraum (27) umschließt, und mit einer Anzahl von in den Aufnahmeraum (27) hineinragenden Rastzungen (25), die zum Eingriff mit dem Schaft (32) ausgebildet sind, wobei die Vorrichtung ein einstückiges Stanz-Biege-Teil ist, das aus einem gestanzten und in Form gebogenen Blech hergestellt ist, **dadurch gekennzeichnet, dass** die Außenhülse (1) aus einer Basiswand (2) und zwei beidseitig der Basiswand (2) angeordneten Seitenwänden (3, 4) besteht, deren von der Basiswand (2) abgewandten stirnseitigen Randseiten (7) einander gegenüberliegend angeordnet sind, dass an der Außenhülse (1) über wenigstens einen Anbindungssteg (19, 20) ein eine Einführöffnung (26) des Aufnahmeraumes (27) umschließender Deckring (23) angebunden ist und dass die Rastzungen (25) an dem Deckring (23) angesetzt sind.

2. Vorrichtung nach Anspruch 1, **dadurch gekennzeichnet, dass** an den stirnseitigen Randseiten (7) der Seitenwände (3, 4) eine Eingriffstruktur (6, 13, 14) ausgebildet ist.

3. Vorrichtung nach Anspruch 2, **dadurch gekennzeichnet, dass** die Eingriffstruktur zwei an einer stirnseitigen Randseite (7) angesetzte außenseitige Außenfinger (13, 14) und einen an der anderen stirnseitigen Randseite (7) angesetzten mittigen Innenfinger (6) aufweist, der bei bestimmungsgemäßer Anordnung der Vorrichtung in einer Aufnahmeausnehmung (29) in einem zwischen den Außenfingern (13, 14) ausgebildeten Innenfingeraufnahmeraum (30) angeordnet ist.

4. Vorrichtung nach Anspruch 3, **dadurch gekennzeichnet, dass** der Innenfinger (6) sich in einer von der stirnseitigen Randseite (7), an der er angesetzt ist, wegweisenden Richtung konisch verjüngt und dass der Innenfingeraufnahmeraum (30) komplementär zu dem Innenfinger (6) ausgebildet ist.

5. Vorrichtung nach einem der Ansprüche 1 bis 4, **dadurch gekennzeichnet, dass** der Deckring (23) eine Anschlagzapfenanordnung (24) aufweist, die dem oder jedem Anbindungssteg (19, 20) gegenüberliegt und radial über den Aufnahmeraum (27) übersteht.

6. Vorrichtung nach Anspruch 5, **dadurch gekennzeichnet, dass** die Außenhülse (1) im Bereich der Anschlagzapfenanordnung (24) eine Zapfenausnahmeaussparung aufweist.

7. Vorrichtung nach einem der Ansprüche 1 bis 6, **dadurch gekennzeichnet, dass** der Deckring (23) über zwei an der Basiswand (2) angesetzte Anbindungsstege (19, 20) mit der Außenhülse (1) verbunden ist.

8. Vorrichtung nach einem der Ansprüche 1 bis 7, **dadurch gekennzeichnet, dass** der Deckring (23) geschlossen ist.

9. Vorrichtung nach einem der Ansprüche 1 bis 7, **dadurch gekennzeichnet, dass** der Deckring (23) zwei Ringhälften (21, 22) aufweist, deren freie Enden dem oder jedem Anbindungssteg (19, 20) gegenüberliegen und nahe benachbart oder aneinander anliegend angeordnet sind.

10. Vorrichtung nach Anspruch 9, **dadurch gekennzeichnet, dass** jede Ringhälfte (21, 22) die gleiche Anzahl von Rastzungen (25) trägt.

## Claims

1. Device for captively holding a shank (32) of an object (31) at a receiving part (28), comprising an outer sleeve (1), which can be inserted into a receiving recess (29) introduced into the receiving part (28) and which surrounds a receiving space (27), and comprising a number of locking lugs (25) projecting into the receiving space (27) which are configured to engage with the shank (32), wherein the device is a one-piece press-bent part which is made from sheet metal, stamped out and bent into shape, **characterised in that** the outer sleeve (1) consists of a base wall (2) and two side walls (3, 4) arranged on either side of the base wall (2), the end-side edge faces (7) of said side walls (3, 4) facing away from the base wall (2) being arranged opposing one another, that a cover ring (23) surrounding an introducing aperture (26) of the receiving space (27) is connected to the outer sleeve (1) via at least one connecting web (19, 20) and that the locking lugs (25) are attached to the cover ring (23).

2. Device according to claim 1, **characterised in that** an engagement structure (6, 13, 14) is provided at the end-side edge faces (7) of the side walls (3, 4).

3. Device according to claim 2, **characterised in that** the engagement structure comprises two outer-side external fingers (13, 14) attached to one end-side edge face (7) and a central internal finger (6) attached at the other end-side edge face (7), said internal finger being arranged, on proper arrangement of the device in a receiving recess (29), in an internal finger receiving space (30) provided between the external fingers (13, 14).

4. Device according to claim 3, **characterised in that** the internal finger (6) narrows conically in a direction facing away from the end-side edge face (7) to which said finger is attached and that the internal finger receiving space (30) is configured complementary to the internal finger (6).

5. Device according to one of the claims 1 to 4, **characterised in that** the cover ring (23) has a contact projection arrangement (24) which lies opposing the, or each, connecting web (19, 20) and extends radially over the receiving space (27).

6. Device according to claim 5, **characterised in that** the outer sleeve (1) comprises a projection receiving recess in the region of the contact projection arrangement (24).

7. Device according to one of the claims 1 to 6, **characterised in that** the cover ring (23) is connected to the outer sleeve (1) via two connecting webs (19, 20) attached to the base wall (2).

8. Device according to one of the claims 1 to 7, **characterised in that** the cover ring (23) is closed.

9. Device according to one of the claims 1 to 7, **characterised in that** the cover ring (23) has two ring halves (21, 22), the free ends of which oppose the or each connecting web (19, 20) and are arranged closely adjacent to, or lying against, one another.

10. Device according to claim 9, **characterised in that** each ring half (21, 22) bears the same number of locking lugs (25).

## Revendications

1. Dispositif pour le maintien imperdable d'une tige (32) d'un objet (31) sur une pièce de réception (28), comprenant une douille extérieure (1) qui est destinée à être emmanchée dans un évidement de réception (29) ménagé dans la pièce de réception (28) et qui définit un espace de réception (27) et comprenant un certain nombre de languettes d'accrochage (25) qui font saillie dans l'espace de réception (27), qui sont configurées pour venir en prise d'encastrement avec la tige (32), le dispositif se présentant en l'occurrence sous la forme d'une pièce monobloc obtenue par découpage à la presse et pliage, qui est réalisée à partir d'un flan en tôle découpé à la presse et mis en forme par pliage, **caractérisé en ce que** la douille extérieure (1) se compose d'une paroi de base (2) et de deux parois latérales (3, 4) disposées de part et d'autre de la paroi de base (2), dont les bords latéraux antérieurs (7), orientés à l'opposé de la paroi de base (2), se font respectivement face, **en ce qu'**une bague d'entretoisement (23) définissant une ouverture d'introduction (26) dans l'espace de réception (27) est raccordée à la douille extérieure (1) par l'intermédiaire d'au moins une barrette entretoise de liaison (19, 20) et **en ce que** les languettes d'accrochage (25) sont disposées attenantes à la bague d'entretoisement (23).

2. Dispositif selon la revendication 1, **caractérisé en ce que** les bords latéraux antérieurs (7) des parois latérales (3, 4) sont munis d'une structure de mise en prise d'encastrement (6, 13, 14).

3. Dispositif selon la revendication 2, **caractérisé en ce que** la structure de mise en prise d'encastrement se compose de deux doigts extérieurs (13, 14) disposés attenants à un bord latéral antérieur (7) et d'un doigt intérieur central (6) disposé attenant à l'autre bord latéral antérieur (7) qui, lorsque le dispositif est disposé dans sa position d'utilisation dans un évidement de réception (29), vient s'insérer dans un espace d'emmanchement de doigt intérieur (30) prévu entre les doigts extérieurs (13, 14).

4. Dispositif selon la revendication 3, **caractérisé en ce que** le doigt intérieur (6) va en s'amenuisant vers l'extérieur, depuis le bord latéral antérieur (7) auquel il est attenant, suivant un tracé conique et **en ce que** la configuration de l'espace d'emmanchement du doigt intérieur (30)est étudiée pour venir en correspondance d'accouplement avec celle du doigt intérieur (6).

5. Dispositif selon l'une des revendications 1 à 4, **caractérisé en ce que** la bague d'entretoisement (23) est munie d'un agencement formant collet de butée (24) qui est disposé à l'opposé de la ou de chaque barrette entretoise de liaison (19, 20) et qui fait saillie dans le plan radial au-dessus de l'espace de réception (27).

6. Dispositif selon la revendication 5, **caractérisé en ce que** la douille extérieure (1) est pourvue, dans la zone de l'agencement formant collet de butée (24), d'une échancrure de réception du collet.

7. Dispositif selon l'une des revendications 1 à 6, **caractérisé en ce que** la bague d'entretoisement (23) est raccordée à la douille extérieure (1) par l'intermédiaire de deux barrettes entretoises de liaison (29, 20) attenantes à la paroi de base (2).

8. Dispositif selon l'une des revendications 1 à 7, **caractérisé en ce que** la bague d'entretoisement (23) est de type monobloc.

9. Dispositif selon l'une des revendications 1 à 7, **caractérisé en ce que** la bague d'entretoisement (23) se compose de deux moitiés annulaires (21, 22), dont les extrémités libres sont disposées opposées à la ou à chaque barrette entretoise de liaison (19, 20) et sont très voisines l'une de l'autre ou contigües l'une à l'autre.

10. Dispositif selon la revendication 9, **caractérisé en ce que** chaque moitié annulaire (21, 22) comporte un même nombre de languettes d'accrochage (25).
